# EUROPÄISCHE PATENTSCHRIFT

(11) **EP 2 655 928 B1**
(45) Veröffentlichungstag und Bekanntmachung des Hinweises auf die Patenterteilung: **07.01.2015**
(21) Anmeldenummer: 11784679.0
(22) Anmeldetag: 21.11.2011
(51) Int. Cl.: F16H 3/66

(54) **MEHRSTUFENGETRIEBE IN PLANETENBAUWEISE**
MULTI-STAGE GEARBOX OF PLANETARY CONSTRUCTION
BOÎTE DE VITESSES MULTIÉTAGÉE À TRAINS PLANÉTAIRES

(30) Priorität: 20.12.2010 DE 102010063494
(43) Veröffentlichungstag der Anmeldung: 30.10.2013
(73) Patentinhaber: ZF Friedrichshafen AG, 88038 Friedrichshafen (DE)
(72) Erfinder: FELLMANN, Martin, 88045 Friedrichshafen (DE); BECK, Stefan, 88097 Eriskirch (DE); GUMPOLTSBERGER, Gerhard, 88048 Friedrichshafen (DE)
(86) Internationale Anmeldenummer: PCT/EP2011/070510
(87) Internationale Veröffentlichungsnummer: WO 2012/084369

(56) Entgegenhaltungen:
- EP-A2- 1 416 196
- EP-B1- 0 495 942
- WO-A1-92/03670
- DE-A1- 2 065 393

## Beschreibung

Die Erfindung betrifft ein Mehrstufengetriebe in Planetenbauweise, insbesondere ein Splittergetriebe einer Arbeitsmaschine, mit einem Gehäuse, in welchem drei Planetensätze und mehrere Wellen aufgenommen sind, und mit Schaltelementen, welche durch Bremsen und Kupplungen gebildet sind und mittels deren gezielter Betätigung verschiedene Übersetzungsverhältnisse zwischen einer Antriebs- und einer Abtriebswelle darstellbar sind.

Ein derartiges Mehrstufengetriebe kommt vorzugsweise als Splittergetriebe bei Arbeitsmaschinen zum Einsatz, wobei darstellbare Gänge des Splittergetriebes durch eine gezielte Betätigung von Schaltelementen und einen hierbei innerhalb von Planetensätzen jeweils wirksamen Leistungsfluss definiert werden. Mit "Splittergetriebe" wird hierbei üblicherweise eine Getriebeeinheit bezeichnet, mit welcher mehrere Übersetzungsverhältnisse mit geringen Stufensprüngen darstellbar sind. Bei einem Gesamtgetriebe einer landwirtschaftlichen Arbeitsmaschine, wie beispielsweise einem Traktor, wird ein derartiges Splittergetriebe als Lastschaltgetriebe üblicherweise mit einem weiteren mehrgängigen Getriebe in Form eines Gruppengetriebes mit hohen Stufensprüngen kombiniert, so dass durch diese Kombination ein Gesamtgetriebe mit einer hohe Anzahl an darstellbaren Fahrstufen bei gleichzeitig hoher Spreizung erreichbar ist. Häufig kommen hierbei weitere Getriebeeinheiten in Form einer Kriechgang- und/oder einer Wendeeinheit hinzu.

Aus der EP 0495942 B1 ist ein Mehrstufengetriebe in Planetenbauweise bekannt, welches als Splittergetriebe mit einem Gruppengetriebe zu einem Gesamtgetriebe einer landwirtschaftlichen Arbeitsmaschine kombiniert wird. Dabei weist dieses Splittergetriebe ein Gehäuse auf, in welchem drei Planetensätze und mehrere Wellen angeordnet sind, von denen eine die Antriebswelle und eine andere die Abtriebswelle des Mehrstufengetriebes darstellt. Des Weiteren sind im Bereich der Wellen mehrere Schaltelemente vorgesehen, mittels deren gezielter Betätigung der Leistungsfluss innerhalb der drei Planetensätze variiert und damit verschiedene Übersetzungsverhältnisse zwischen der Antriebs- und der Abtriebswelle definierbar sind. Insgesamt sind hierdurch sechs Übersetzungsverhältnisse darstellbar.

Weitere Mehrstufengetriebe sind aus DE 2065393 A1 bekannt.

Es ist die Aufgabe der vorliegenden Erfindung, ein Mehrstufengetriebe der eingangs genannten Art vorzuschlagen, mittels welchem eine hohe Anzahl an Übersetzungsverhältnisse mit einer geringen Bauteilanzahl und damit bei einem niedrigen Gewicht und geringem Herstellungsaufwand realisierbar ist. Ferner sollte sich eine nahezu geometrische Übersetzungsreihe darstellen lassen, sowie die Belastungen der einzelnen Getriebeelemente reduziert sein. Zudem sollen kleine und nahezu geometrische Stufensprünge zwischen den einzelnen Übersetzungsverhältnissen, sowie eine kompakte Bauweise möglich sein. Schließlich sollen hohe Verzahnungswirkungsgrade erreichbar sein.

Diese Aufgabe wird ausgehend vom Oberbegriff des Anspruchs 1 in Verbindung mit dessen kennzeichnenden Merkmalen gelöst. Die darauf folgenden, abhängigen Ansprüche geben dabei jeweils vorteilhafte Weiterbildungen der Erfindung wieder.

Demnach wird ein erfindungsgemäßes Mehrstufengetriebe in Planetenbauweise vorgeschlagen, welches in einem Gehäuse eine Antriebs- und eine Abtriebswelle, sowie weitere drehbare Wellen und drei Planetensätze aufnimmt. Die Planetensätze sind dabei bevorzugt in axialer Richtung betrachtet in der Reihenfolge erster Planetensatz, zweiter Planetensatz und dritter Planetensatz angeordnet und bevorzugt jeweils als Minusplanetensatz ausgebildet. Es ist jedoch ebenso denkbar, an Stellen, wo es die Bindbarkeit zulässt, einzelne oder mehrere der Minusplanetensätze in Plusplanetensätze umzuwandeln, wenn gleichzeitig eine Steg- und eine Hohlradanbindung getauscht und der Betrag der Standübersetzung um Eins erhöht wird. Zudem ist auch eine anderweitige Anordnung der Planetensätze in axialer Richtung als die oben beschriebene im Rahmen der Erfindung denkbar.

Bekanntlich umfasst ein einfacher Minusplanetensatz ein Sonnenrad, ein Hohlrad und einen Steg, welcher Planetenräder drehbar gelagert trägt, die jeweils mit dem Sonnenrad und dem Hohlrad kämmen. Bei festgesetztem Steg wird dabei eine zum Sonnenrad entgegengesetzte Drehrichtung des Hohlrades erreicht.

Im Gegensatz hierzu umfasst ein einfacher Plusplanetensatz ein Sonnenrad, ein Hohlrad und einen Steg, welcher innere und äußere Planetenräder drehbar gelagert trägt. Dabei kämmen alle inneren Planetenräder mit dem Sonnenrad und alle äußeren Planetenräder mit dem Hohlrad, wobei zudem jedes innere Planetenrad mit jeweils einem äußeren Planetenrad in Eingriff steht. Bei einem Festsetzen des Steges wird dabei eine gleiche Drehrichtung des Hohlrades gegenüber dem Sonnenrad erreicht.

Erfindungsgemäß verbindet eine dritte Welle ein Sonnenrad eines ersten Planetensatzes mit einem Hohlrad eines dritten Planetensatzes und kann über eine erste Kupplung mit einer vierten Welle verbunden werden, welche im weiteren Verlauf mit einem Steg eines zweiten Planetensatzes gekoppelt ist. Eine fünfte Welle ist mit einem Sonnenrad des dritten Planetensatzes gekoppelt und kann über eine erste Bremse am Gehäuse festgesetzt werden. Des Weiteren verbindet eine sechste Welle ein Hohlrad des zweiten Planetensatzes mit einem Steg des dritten Planetensatzes und ist mittels einer zweiten Bremse mit dem Gehäuse koppelbar. Schließlich ist die Antriebswelle mit einem Hohlrad des ersten Planetensatzes verbunden und die Abtriebswelle mit einem Sonnenrad des zweiten Planetensatzes gekoppelt.

Bevorzugt dient die Antriebswelle als Antrieb des Mehrstufengetriebes, d.h. zum Einleiten eines Drehmoments in das Mehrstufengetriebe. Sie ist daher insbesondere von einem Antriebsmotor, beispielsweise einem Verbrennungs- oder Elektromotor, antreibbar. Die Abtriebswelle dient dementsprechend bevorzugt als Abtrieb des Mehrstufengetriebes, d.h. zum Abgriff eines Drehmoments von dem Mehrstufengetriebe, insbesondere zum Betreiben eines Aggregats, beispielsweise einer Pumpe oder eines elektrischen Generators, oder eines Fahrzeugantriebs, beispielsweise eines Fahrzeugrads oder einer Fahrzeuggleiskette.

In Weiterbildung der Erfindung kann die vierte Welle mittels einer zweiten Kupplung mit der fünften Welle verbunden werden. Ferner ist die Abtriebswelle mit einem Steg des ersten Planetensatzes verbunden und kann über eine dritte Kupplung mit der vierten Welle gekoppelt werden.

Alternativ hierzu ist die Abtriebswelle ferner mit einem Steg des ersten Planetensatzes verbunden und die vierte Welle zum einen über eine zweite Kupplung mit der fünften Welle verbindbar und zum andren mittels einer dritten Kupplung mit der sechsten Welle koppelbar.

Als weitere alternative Ausgestaltung kann die vierte Welle mit der fünften Welle über eine zweite Kupplung verbunden werden, wobei die Abtriebswelle ferner mit einem Steg des ersten Planetensatzes verbunden ist und mittels einer dritten Kupplung mit der sechsten Welle lösbar gekoppelt werden kann.

In den vorgenannten Fällen ergibt sich ein erstes Übersetzungsverhältnis durch Schließen der ersten Bremse und der zweiten Kupplung, wohingegen ein zweites Übersetzungsverhältnis durch Betätigen der zweiten Bremse und der zweiten Kupplung wählbar ist. Ein weiteres, drittes Übersetzungsverhältnis wird durch Schließen der zweiten Bremse und der ersten Kupplung geschaltet. Des Weiteren ergibt sich ein viertes Übersetzungsverhältnis durch Betätigen der ersten Bremse und der ersten Kupplung, ein darauf folgendes fünftes Übersetzungsverhältnis durch Schließen der ersten und der dritten Kupplung. Alternativ hierzu kann das fünfte Übersetzungsverhältnis auch durch Betätigen der zweiten und dritten Kupplung oder durch Schließen der ersten und zweiten Kupplung geschaltet werden. Schließlich ergibt sich ein sechstes Übersetzungsverhältnis durch Betätigen der ersten Bremse und der dritten Kupplung. Folglich lassen sich durch die vorgenannten Varianten eines erfindungsgemäßen Mehrstufengetriebes insgesamt sechs unterschiedliche Übersetzungsverhältnisse realisieren.

In Weiterbildung der Erfindung ergibt sich zudem ein zusätzliches Übersetzungsverhältnis durch Schließen der ersten und zweiten Bremse. Dementsprechend können die sechs unterschiedlichen Gangstufen der vorgenannten Varianten eines Mehrstufengetriebes auf insgesamt sieben darstellbare Gänge ausgedehnt werden.

Entsprechend einer alternativen Ausführungsform kann die vierte Welle mittels einer zweiten Kupplung mit der fünften Welle verbunden werden. Zudem ist die Abtriebswelle ferner über eine dritte Kupplung mit einer siebten Welle koppelbar, die mit einem Steg des ersten Planetensatzes in Verbindung steht. Zudem ist diese siebte Welle mittels einer vierten Kupplung mit der vierten Welle lösbar verbindbar.

Erfindungsgemäß ergibt sich hierbei ein erstes Übersetzungsverhältnis durch Schließen der ersten Bremse, sowie der zweiten und dritten Kupplung, wobei ein zweites Übersetzungsverhältnis durch Betätigen der zweiten Bremse, sowie der zweiten und dritten Kupplung wählbar ist. Ein drittes Übersetzungsverhältnis wird durch Schließen der zweiten Bremse, sowie der ersten und dritten Kupplung geschaltet. Des Weiteren ergibt sich ein viertes Übersetzungsverhältnis durch Betätigen der ersten Bremse, sowie der ersten und dritten Kupplung, ein fünftes Übersetzungsverhältnis wird durch Schließen der ersten, dritten und vierten Kupplung geschaltet. Alternativ hierzu ergibt sich das fünfte Übersetzungsverhältnis auch durch Betätigen der ersten, zweiten und dritten Kupplung oder durch Schließen der zweiten, dritten und vierten Kupplung oder durch Betätigen der ersten, zweiten und vierten Kupplung. Ferner ist ein sechstes Übersetzungsverhältnis durch Schließen der ersten Bremse, sowie der dritten und vierten Kupplung wählbar, ein daran anschließende siebtes Übersetzungsverhältnis wird durch Betätigen der ersten Bremse, sowie der ersten und vierten Kupplung geschaltet. Schließlich ergibt sich ein achtes Übersetzungsverhältnis durch Schließen sämtlicher Bremsen und der vierten Kupplung. Folglich lassen sich durch diese Ausgestaltung acht Übersetzungsverhältnisse darstellen.

Erfindungsgemäß ist zudem ein erstes zusätzliches Übersetzungsverhältnis durch Betätigen sämtlicher Bremsen und der dritten Kupplung schaltbar, wobei ein zweites zusätzliches Übersetzungsverhältnis durch Schließen der zweiten Bremse sowie der zweiten und vierten Kupplung geschaltet wird. Ein drittes zusätzliches Übersetzungsverhältnis ergibt sich durch Betätigen der zweiten Bremse, sowie der ersten und vierten Kupplung. Hierdurch lässt sich die vorstehend beschriebene Variante auf ein Mehrstufengetriebe mit maximal elf Gangstufen erweitern.

Bevorzugt weisen der erste und der zweite Planetensatz jeweils eine Standübersetzung von -1,800 und der dritte Planetensatz eine Standübersetzung von -3,000 auf.

In Weiterbildung der Erfindung ist die Antriebswelle des Mehrstufengetriebes zur Realisierung eines Nebenabtriebs insbesondere durch das Mehrstufengetriebe hindurchgeführt und dient dabei neben der Abtriebswelle als zusätzlicher zweiter Abtrieb, beispielsweise im Sinne eines Zapfwellenabtriebs für austauschbare Nebenaggregate.

Grundsätzlich umfasst die Erfindung auch Ausführungen des Mehrstufengetriebes, bei denen Antrieb und Abtrieb kinematisch gegeneinander vertauscht sind. Hierbei dient die genannte Abtriebswelle des Mehrstufengetriebes als dessen Antrieb, d.h. zum Einleiten eines Drehmoments in das Mehrstufengetriebe, beispielsweise mittels eines Antriebsmotors, und die genannte Antriebswelle des Mehrstufengetriebes dient als dessen Abtrieb, d.h. zum Abgriff eines Drehmoments von dem Mehrstufengetriebe, beispielsweise zum Betreiben eines Aggregats oder Fahrzeugantriebs. In einem Schaltschema des Mehrstufengetriebes kehrt sich die Reihenfolge der Übersetzungsverhältnisse dann entsprechend um.

Mittels der einzelnen erfindungsgemäßen Ausgestaltungen eines Mehrstufengetriebes ist es möglich, die jeweiligen Übersetzungsverhältnisse mit einer niedrigen Anzahl an Bauteilen zu realisieren um somit den Herstellungsaufwand und das Gewicht gering zu halten. Zudem ergeben sich hierbei eine insbesondere für ein Splittergetriebe einer Arbeitsmaschine geeignete nahezu geometrische Übersetzungsreihe, sowie jeweils kleine Stufensprünge, welche ebenfalls nahezu geometrisch ausgestaltet sind.

Ferner zeichnen sich die einzelnen Ausgestaltungen des erfindungsgemäßen Mehrstufengetriebes durch niedrige Absolut- und Relativdrehzahlen, sowie niedrige Planetensatz- und Schaltelementmomente aus, was sich auf deren Dimensionierung und deren Lebensdauer positiv auswirkt. Insgesamt lassen sich zudem gute Verzahnungswirkungsgrade sowie eine kompakte Bauweise erreichen.

Die Erfindung ist nicht auf die angegebene Kombination der Merkmale des Hauptanspruchs und der abhängigen Ansprüche beschränkt. Es ergeben sich darüber hinaus Möglichkeiten, einzelne Merkmale, auch soweit sie aus den Ansprüchen, der nachfolgenden Beschreibung der Ausführungsbeispiele oder unmittelbar aus den Zeichnungen hervorgehen, miteinander zu kombinieren. Die Bezugnahme der Ansprüche auf die Zeichnungen durch die Verwendung von Bezugszeichen soll den Schutzumfang der Ansprüche nicht beschränken.

Weitere, die Erfindung verbessernde Maßnahmen werden nachstehend gemeinsam mit der Beschreibung bevorzugter Ausführungsformen der Erfindung näher dargestellt. Es zeigt:
- Fig. 1: eine schematische Ansicht einer ersten bevorzugten Ausführungsform eines erfindungsgemäßen Mehrstufengetriebes;
- Fig. 2: ein beispielhaftes Schaltschema für ein Mehrstufengetriebe gemäß Fig. 1;
- Fig. 3: eine schematische Ansicht einer zweiten bevorzugten Ausführungsform eines erfindungsgemäßen Mehrstufengetriebes;
- Fig. 4: eine schematische Ansicht einer dritten bevorzugten Ausführungsform eines erfindungsgemäßen Mehrstufengetriebes;
- Fig. 5: eine schematische Ansicht einer weiteren, vierten bevorzugten Ausführungsform eines erfindungsgemäßen Mehrstufengetriebes; und
- Fig. 6: ein beispielhaftes Schaltschema für ein Mehrstufengetriebe gemäß Fig. 5.

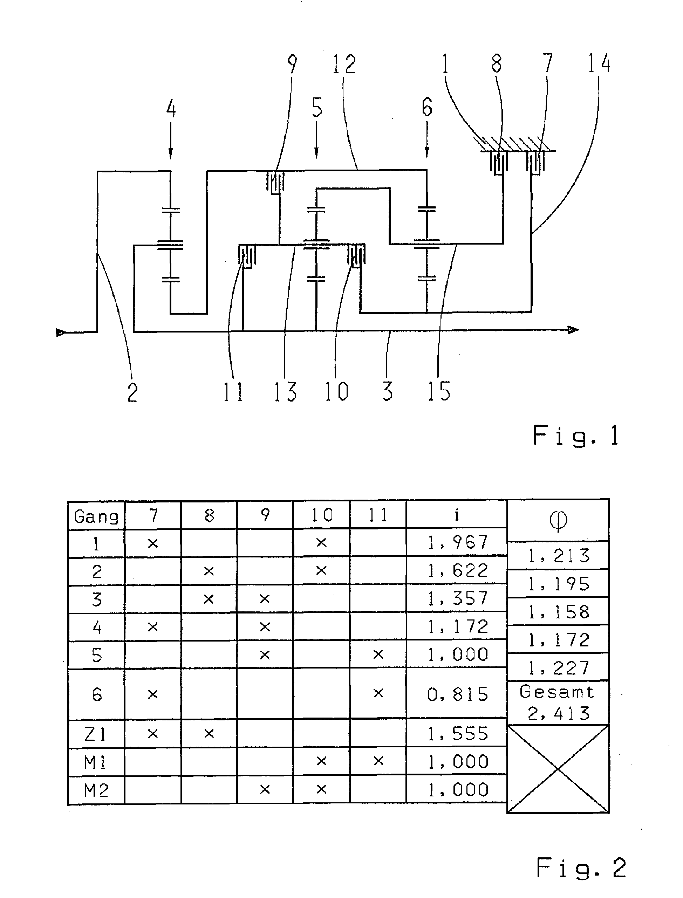

Aus Fig. 1 geht eine erste bevorzugte Ausführungsform eines erfindungsgemäßen Mehrstufengetriebes hervor, bei welchem es sich bevorzugt um ein Splittergetriebe eines Gesamtgetriebes einer Arbeitsmaschine handelt. Innerhalb des Gesamtgetriebes kann dieses Splittergetriebe dabei mit einem Gruppengetriebe kombiniert werden, so dass sich aus der Kombination beider Getriebeeinheiten eine sehr hohe Anzahl an darstellbaren Übersetzungsverhältnissen und eine große Getriebespreizung des Gesamtgetriebes ergibt, was diese Kombination insbesondere für die Anwendung bei einem landwirtschaftlichen Arbeitsfahrzeug, beispielsweise einem Ackerschlepper, geeignet macht. Des Weiteren kann eine zusätzliche Kombination mit einer Kriechgang- und/oder einer Wendeeinheit erfolgen. Eine geometrische Aneinanderreihung der einzelnen Getriebeeinheiten im Gesamtgetriebe ist hierbei prinzipiell frei wählbar.

Wie aus Fig. 1 ersichtlich ist, nimmt ein Gehäuse 1 bei dem erfindungsgemäßen Mehrstufengetriebe eine Antriebswelle 2, eine Abtriebswelle 3, sowie drei Planetensätze 4, 5 und 6 auf. Vorliegend sind die Planetensätze 4, 5 und 6 jeweils als Minusplanetensätze ausgebildet, wobei es erfindungsgemäß aber ebenso gut denkbar ist, zumindest einen der Minusplanetensätze als Plusplanetensatz auszuführen. Hierbei sind gleichzeitig eine Steg- und eine Hohlradanbindung zu tauschen und der Betrag der Standübersetzung im Vergleich zu der Ausführung als Minusplanetensatz um 1 zu erhöhen. Wie des Weiteren ersichtlich ist, sind die Planetensätze 4, 5 und 6 axial betrachtet in der Reihenfolge 4, 5, 6 angeordnet.

Wie ferner aus Fig. 1 hervorgeht, umfasst das erfindungsgemäße Mehrstufengetriebe insgesamt fünf Schaltelemente, welche sich aus zwei Bremsen 7 und 8 und drei Kupplungen 9, 10 und 11 zusammensetzen. Eine räumliche Anordnung dieser Schaltelemente kann dabei beliebig sein und wird nur durch deren Abmessungen, sowie die äußere Formgebung begrenzt. Vorliegend sind die Bremsen 7 und 8 und die Kupplungen 9, 10 und 11 jeweils als Lamellenschaltelemente ausgeführt, wobei erfindungsgemäß aber ebenso gut eine Ausführung als formschlüssige Schaltelemente oder aber auch als anderweitige reibschlüssige Schaltelemente denkbar ist.

Durch eine gezielte Betätigung der Schaltelemente ist ein selektives Schalten verschiedener Übersetzungsverhältnisse zwischen der Antriebswelle 2 und der Abtriebswelle 3 möglich. Ferner sind in dem Gehäuse 1 insgesamt sechs drehbare Wellen aufgenommen, welche neben der Antriebswelle 2 und der Abtriebswelle 3 durch eine dritte Welle 12, eine vierte Welle 13, eine fünfte Welle 14 und eine sechste Welle 15 gebildet sind.

Erfindungsgemäß verbindet nun die dritte Welle 12 ein Sonnenrad des ersten Planetensatzes 4 mit einem Hohlrad des dritten Planetensatzes 6 und kann zudem über die erste Kupplung 9 mit der vierten Welle 13 verbunden werden. Die vierte Welle 13 wiederum ist mit einem Steg des zweiten Planetensatzes 5 gekoppelt und kann zum einen über die zweite Kupplung 10 mit der fünften Welle 14 und zum anderen mittels der dritten Kupplung 11 mit der Abtriebswelle 3 lösbar verbunden werden. Die fünfte Welle 14 steht im weiteren Verlauf mit einem Sonnenrad des dritten Planetensatzes 6 in Verbindung und ist über die erste Bremse 7 am Gehäuse 1 festsetzbar.

Des Weiteren verbindet die sechste Welle 15 ein Hohlrad des zweiten Planetensatzes 5 mit einem Steg des dritten Planetensatzes 6 und kann mittels der zweiten Bremse 8 drehfest mit dem Gehäuse 1 verbunden werden. Schließlich ist noch die Abtriebswelle 3 zudem mit einem Sonnenrad des zweiten Planetensatzes 5, sowie einem Steg des ersten Planetensatzes 4 und die Antriebswelle 2 mit einem Hohlrad des ersten Planetensatzes 4 gekoppelt.

Aus Fig. 2 geht ein beispielhaftes Schaltschema eines Mehrstufengetriebes gemäß Fig. 1 hervor, wobei hierbei zum Schalten von insgesamt sechs Übersetzungsverhältnissen, sowie einem zusätzlichen Übersetzungsverhältnis Z1 zwei der fünf Schaltelemente geschlossen sind und zum Schalten in das jeweils benachbarte Übersetzungsverhältnis der Zustand zweier Schaltelemente zu variieren ist. Hierbei können aus dem beispielhaften Schaltschema die jeweiligen Übersetzungen i in den einzelnen Übersetzungsverhältnissen, sowie die Gangsprünge ϕ zum jeweils benachbarten Übersetzungsverhältnis beispielhaft entnommen werden. Diese Werte werden dabei bei einer bevorzugten Standübersetzung des ersten Planetensatzes 4 von -1,800, einer bevorzugten Standübersetzung des zweiten Planetensatzes 5 von -1,800 und einer bevorzugten Standübersetzung des dritten Planetensatzes 6 von -3,000 erreicht. Zudem ist eine Spreizung des Getriebes von 2,413 aus Fig. 2 ersichtlich.

Wie des Weiteren aus dem Schaltschema nach Fig. 2 hervorgeht, ergibt sich ein erstes Übersetzungsverhältnis durch Schließen der ersten Bremse 7 und der zweiten Kupplung 10, wobei zum Schalten in das benachbarte, zweite Übersetzungsverhältnis die erste Bremse 7 zu lösen und die zweite Bremse 8 zu schließen ist. Ein auf das zweite Übersetzungsverhältnis folgendes drittes Übersetzungsverhältnis wird durch Öffnen der zweiten Kupplung 10 und Schließen der ersten Kupplung 9 gewählt. Ausgehend vom dritten Übersetzungsverhältnis ist dann zum Schalten eines vierten Übersetzungsverhältnisses die zweite Bremse 8 zu lösen und die erste Bremse 7 zu schließen, während zum weiteren Hochschalten in ein fünftes Übersetzungsverhältnis die erste Bremse 7 wiederrum zu lösen und die dritte Kupplung 11 zu betätigen ist. Alternativ hierzu kann das fünfte Übersetzungsverhältnis auch durch Schließen der zweiten Kupplung 10 und der dritten Kupplung 11 oder durch Betätigen der ersten Kupplung 9 und der zweiten Kupplung 10 dargestellt werden, wobei diese Alternativen in Fig. 2 mit M1 und M2 bezeichnet sind. Schließlich ergibt sich ein sechstes Übersetzungsverhältnis durch Schließen der ersten Bremse 7 und der dritten Kupplung 11. Das optionale zusätzliche Übersetzungsverhältnis, welches vorliegend mit Z1 bezeichnet ist, wird durch Schließen der beiden Bremsen 7 und 8 geschaltet. Allerdings führt die Einreihung dieses zusätzlichen Übersetzungsverhältnisses in die bestehende Übersetzungsreihe zu einer insgesamt nicht mehr geometrischen Übersetzungsreihe, was jedoch bei einem Splittergetriebe für eine Arbeitsmaschine wünschenswert ist. Daher ist dieses zusätzliche Übersetzungsverhältnis nur optional vorzusehen.

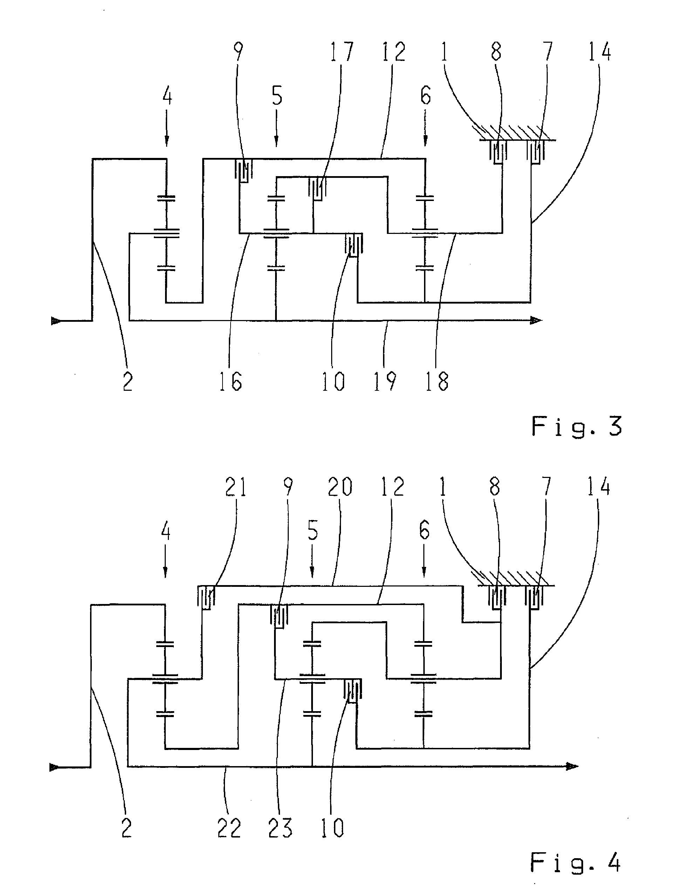

In Fig. 3 ist eine schematische Ansicht einer zweiten bevorzugten Ausführungsform eines erfindungsgemäßen Mehrstufengetriebes dargestellt. Im Unterschied zu der im Vorfeld beschriebenen Variante kann in diesem Fall eine vierte Welle 16, neben einer möglichen Kopplung mit der dritten Welle 12 über die erste Kupplung 9 und mit der fünften Welle 14 über die zweite Kupplung 10, auch mittels einer dritten Kupplung 17 mit einer sechsten Welle 18 lösbar verbunden werden. Diese sechste Welle 18 ist dabei, wie schon bei der vorhergehenden Variante, über die zweite Bremse 8 am Gehäuse 1 festsetzbar und verbindet ein Hohlrad des zweiten Planetensatzes 5 mit einem Steg des dritten Planetensatzes 6. Als weiterer Unterschied ist eine Abtriebswelle 19 nur mit dem Steg des ersten Planetensatzes 4 und dem Sonnenrad des zweiten Planetensatzes 5 verbunden.

Dabei ist der Aufbau gemäß der zweiten Ausführungsform nach Fig. 3 wirkungsgleich zu der vorherigen Ausführungsform gemäß Fig. 1, so dass in den einzelnen Übersetzungsverhältnissen im Falle der bevorzugten Standübersetzungen der Planetensätze 4, 5 und 6 auch die Übersetzungen i sowie die Gangsprünge ϕ gemäß dem beispielhaften Schaltschema aus Fig. 2 erreicht werden. Auch die Schaltung der einzelnen Übersetzungsverhältnisse unterscheidet sich zu der Beschreibung zu Fig. 2 nur dahingehend, dass anstelle der dritten Kupplung 11 in Fig. 1 jeweils die dritte Kupplung 17 in Fig. 3 zu betätigen ist.

Aus Fig. 4 geht eine weitere, dritte Ausführungsform eines erfindungsgemäßen Mehrstufengetriebes hervor. Diese unterscheidet sich von der ersten Ausführungsform gemäß Fig. 1 dahingehend, dass eine sechste Welle 20 neben einer Verbindung mit dem Hohlrad des zweiten Planetensatzes 5 und dem Steg des dritten Planetensatzes 6, sowie einer möglichen Festsetzung am Gehäuse 1 über die zweite Bremse 8 zudem über einen radial außenliegenden und sich in axialer Richtung erstreckenden Ansatz verfügt, an dessen Ende mittels einer dritten Kupplung 21 eine Kopplung mit einer Abtriebswelle 22 erfolgen kann. Diese Abtriebswelle 22 verbindet des Weiteren den Steg des ersten Planetensatzes 4 mit dem Sonnenrad des zweiten Planetensatzes 5. Schließlich ist eine vierte Welle 23 lediglich über die erste Kupplung 9 mit der dritten Welle 12 und mittels der zweiten Kupplung 10 mit der fünften Welle 14 koppelbar und steht mit dem Steg des zweiten Planetensatzes 5 in Verbindung.

Auch im Falle der Dritten Ausführungsform des erfindungsgemäßen Mehrstufengetriebes nach Fig. 4 werden wiederum bei Wahl der entsprechenden Standübersetzungen der Planetensätze 4, 5 und 6 die Übersetzungen i in den einzelnen Gängen, sowie die Gangsprünge ϕ zwischen den Gängen gemäß dem beispielhaften Schaltschema nach Fig. 2 erreicht. Auch die Anzahl der darstellbaren Übersetzungsverhältnisse, sowie deren Schaltung entsprechen dem Schema nach Fig. 2, wobei als einziger Unterschied anstelle der dritten Kupplung 11 in Fig. 1 jeweils die dritte Kupplung 21 in Fig. 4 zu betätigen ist.

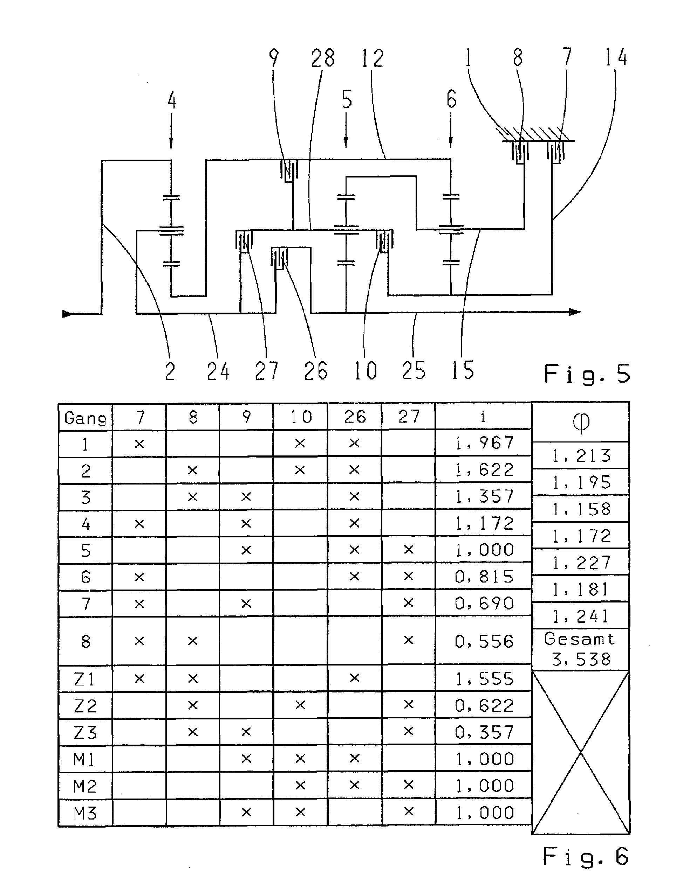

Schließlich geht aus Fig. 5 eine weitere, vierte Ausführungsform eines erfindungsgemäßen Mehrstufengetriebes hervor. Im Unterschied zu der Ausführungsform gemäß Fig. 1 sind insgesamt sechs Schaltelemente sowie eine zusätzliche, siebte Welle 24 vorgesehen, so dass sich eine höhere Anzahl an Übersetzungsverhältnissen darstellen lässt. Zudem ist im Falle der Ausführungsform nach Fig. 5 eine Abtriebswelle 25 neben einer Verbindung mit dem Sonnenrad des zweiten Planetensatzes 5 mittels einer dritten Kupplung 26 mit der siebten Welle 24 lösbar verbindbar. Dabei steht die siebte Welle 24 im weiteren Verlauf mit dem Steg des ersten Planetensatzes 4 in Verbindung und kann zudem über eine vierte Kupplung 27 mit einer vierten Welle 28 gekoppelt werden. Diese vierte Welle 28 ist des Weiteren, wie schon bei Fig. 1, mit dem Steg des zweiten Planetensatzes 5 verbunden und mittels der ersten Kupplung 9 mit der dritten Welle 12 und über die zweite Kupplung 10 mit der fünften Welle 14 lösbar verbindbar. Auch die weiteren Ausgestaltungen der Ausführungsform nach Fig. 5 entsprechen der Variante nach Fig. 1.

Aus Fig. 6 geht ein beispielhaftes Schaltschema eines erfindungsgemäßen Mehrstufengetriebes gemäß Fig. 5 hervor. Wie zu erkennen ist, lassen sich insgesamt acht Übersetzungsverhältnisse, sowie drei zusätzliche Übersetzungsverhältnisse, die mit Z1 bis Z3 bezeichnet sind, realisieren. Zudem sind die jeweiligen Übersetzungen i in den einzelnen Übersetzungsverhältnissen, sowie die sich ergebenden Gangsprünge ϕ zum jeweils benachbarten Übersetzungsverhältnis beispielhaft angegeben. Diese Werte ergeben sich dabei für die bevorzugten Standübersetzungen von -1,800 für den ersten Planetensatz 4, von -1,800 für den zweiten Planetensatz 5 und von -3,600 für den dritten Planetensatz 6.

Wie aus Fig. 6 hervorgeht, sind zum Schalten jedes einzelnen der Übersetzungsverhältnisse drei der sechs Schaltelemente zu schließen, wobei zum Schalten in ein jeweils benachbartes Übersetzungsverhältnis der Zustand zweier Schaltelemente zu variieren ist. Dabei ergibt sich ein erstes Übersetzungsverhältnis durch Schließen der ersten Bremse 7 sowie der zweiten Kupplung 10 und der dritten Kupplung 26. Zum Schalten in das benachbarte, zweite Übersetzungsverhältnis ist dann die erste Bremse 7 zu lösen und die zweite Bremse 8 zu betätigen. Ein sich daran anschließendes drittes Übersetzungsverhältnis wird durch Öffnen der zweiten Kupplung 10 und Betätigen der ersten Kupplung 9 gewählt. Ausgehend von diesem dritten Übersetzungsverhältnis ist dann zum Schalten eines vierten Übersetzungsverhältnisses die zweite Brems 8 zu lösen und die erste Bremse 7 zu betätigen, während zum weiteren Hochschalten in ein fünftes Übersetzungsverhältnis die erste Bremse 7 wiederum zu lösen und die vierte Kupplung 27 zu schließen ist. Alternativ hierzu ist das fünfte Übersetzungsverhältnis auch durch Betätigen der ersten Kupplung 9, der zweiten Kupplung 10 und der dritten Kupplung 26 oder durch Schließen der zweiten Kupplung 10, der dritten Kupplung 26 und der vierten Kupplung 27 oder durch Betätigen der ersten Kupplung 9, der zweiten Kupplung 10 und der vierten Kupplung 27 darstellbar. Diese Alternativen sind in Fig. 6 mit M1, M2 und M3 bezeichnet. Ein sechstes Übersetzungsverhältnis ergibt sich durch Schließen der ersten Bremse 7, sowie der dritten Kupplung 26 und der vierten Kupplung 27, wobei zum Hochschalten in ein siebtes Übersetzungsverhältnis die dritte Kupplung 26 zu öffnen und die erste Kupplung 9 zu betätigen ist. Schließlich wird ein achtes Übersetzungsverhältnis durch ein erneutes Öffnen der ersten Kupplung 9 und Betätigen der zweiten Bremse 8 geschaltet.

Ein erstes zusätzliches Übersetzungsverhältnis, welches mit Z1 bezeichnet ist, ergibt sich durch Schließen beider Bremsen 7 und 8, sowie der dritten Kupplung 26. Ein weiteres, mit Z2 bezeichnetes zusätzliches Übersetzungsverhältnis wird durch Betätigen der zweiten Bremse 8 und der zweiten Kupplung 10, sowie der vierten Kupplung 27 geschaltet. Schließlich ist auch noch ein drittes zusätzliches, mit Z3 bezeichnetes Übersetzungsverhältnis durch Betätigen der zweiten Bremse 8, sowie der ersten Kupplung 9 und der vierten Kupplung 27 darstellbar. Allerdings würde die Einreihung dieser zusätzlichen Übersetzungsverhältnisse Z1-Z3 in die bestehende Übersetzungsreihe erneut das Ausbilden eines nahezu geometrischen Stufensprungs über die Übersetzungsreihe verhindern, so dass dies nur optional in Einzelfällen vorzusehen ist.

Mittels der einzelnen erfindungsgemäßen Ausgestaltungen eines Mehrstufengetriebes lässt sich ein Splittergetriebe für ein Arbeitsfahrzeug mit einem niedrigen Herstellungsaufwand und geringem Gewicht erzielen. Zudem treten bei den einzelnen erfindungsgemäßen Mehrstufengetrieben jeweils niedrige Absolut- und Relativdrehzahlen, sowie niedrige Planetensatz- und Schaltelementmomente auf. Schließlich werden jeweils eine gute Übersetzungsreihe und gute Verzahnungswirkungsgrade bei gleichzeitig nahezu geometrischen Stufensprüngen erzielt.

Dabei sind die erfindungsgemäßen Mehrstufengetriebe bevorzugt koaxial aufgebaut, können aber auch in Front-Quer-Bauweise, sprich mit einem Winkelversatz zwischen An- und Abtrieb, realisiert werden.

Zudem ist es im Rahmen der Erfindung denkbar, durch Weglassen von Schaltelementen bzw. durch Ersetzen eines Schaltelements durch eine starre Verbindung ein Mehrstufengetriebe mit einer reduzierten Anzahl an darstellbaren Übersetzungsverhältnissen zu erzeugen. Bevorzugt könnten hierbei durch Weglassen der zweiten Kupplung 10 bei dem Mehrstufengetriebe nach Fig. 5 weitere Varianten eines Mehrstufengetriebes mit sechs Übersetzungsverhältnissen gebildet werden.

Erfindungsgemäß ist es zudem möglich, an jeder geeigneten Stelle des Mehrstufengetriebes zusätzliche Freiläufe vorzusehen, beispielsweise zwischen einer Welle und dem Gehäuse, oder um zwei Wellen gegebenenfalls zu verbinden. Des Weiteren können der Abtrieb prinzipiell überall an der jeweiligen Abtriebswelle und der Antrieb prinzipiell auch überall an der jeweiligen Antriebswelle angeordnet sein.

Im Rahmen einer vorteilhaften Weiterbildung kann die jeweilige Antriebswelle durch ein Kupplungselement von einem Antriebsmotor nach Bedarf getrennt werden, wobei als Kupplungselement ein hydrodynamischer Drehmomentwandler, eine hydrodynamische Kupplung, eine trockene Anfahrkupplung, eine nasse Anfahrkupplung, eine Magnetpulverkupplung, eine Fliehkraftkupplung, etc. einsetzbar sind. Zudem ist es auch möglich, ein derartiges Anfahrelement in Kraftflussrichtung hinter dem Getriebe anzuordnen, wobei in diesem Fall die jeweilige Antriebswelle ständig mit der Kurbelwelle des Antriebsmotors verbunden ist. Alternativ kann auch eines der Schaltelemente des Mehrstufengetriebes als internes Anfahrelement genutzt werden. Dieses interne Anfahrelement sollte in den potentiellen Anfahrgängen vorzugsweise geschlossen sein, d. h. es wird während des Anfahrvorgangs geschlossen.

Zudem ist es möglich zwischen dem Antriebsmotor und dem Getriebe einen Torsionsschwingungsdämpfer anzuordnen.

Schließlich ist es im Rahmen der Erfindung ebenso denkbar, auf jeder der Wellen, bevorzugt auf der jeweiligen Antriebswelle oder der jeweiligen Abtriebswelle eine elektrische Maschine als Generator und/oder als zusätzliche Antriebsmaschine anzuordnen. Selbstverständlich fällt auch jede konstruktive Ausbildung, insbesondere jede räumlich Anordnung der Planetensätze und der Schaltelemente an sich sowie zueinander und soweit technisch sinnvoll, unter den Schutzumfang der vorliegenden Ansprüche, ohne die Funktion des Getriebes, wie sie in den Ansprüchen angegeben ist, zu beeinflussen, auch wenn diese Ausbildung nicht explizit in den Figuren oder in der Beschreibung dargestellt ist.

### Bezugszeichen

- 1: Gehäuse
- 2: Antriebswelle
- 3: Abtriebswelle
- 4: erster Planetensatz
- 5: zweiter Planetensatz
- 6: dritter Planetensatz
- 7: erste Bremse
- 8: zweite Bremse
- 9: erste Kupplung
- 10: zweite Kupplung
- 11: dritte Kupplung
- 12: dritte Welle
- 13: vierte Welle
- 14: fünfte Welle
- 15: sechste Welle
- 16: vierte Welle
- 17: dritte Kupplung
- 18: sechste Welle
- 19: Abtriebswelle
- 20: sechste Welle
- 21: dritte Kupplung
- 22: Abtriebswelle
- 23: vierte Welle
- 24: siebte Welle
- 25: Abtriebswelle
- 26: dritte Kupplung
- 27: vierte Kupplung
- 28: vierte Welle

## Patentansprüche

1. Mehrstufengetriebe in Planetenbauweise, insbesondere Splittergetriebe einer Arbeitsmaschine, mit einem Gehäuse (1), in welchem drei Planetensätze (4, 5, 6) und mehrere Wellen aufgenommen sind, und mit Schaltelementen, welche durch Bremsen (7, 8) und Kupplungen (9, 10, 11; 9, 10, 17; 9, 10, 21; 9, 10, 27, 28) gebildet sind und mittels deren gezielter Betätigung verschiedene Übersetzungsverhältnisse zwischen einer Antriebs- (2) und einer Abtriebswelle (3; 19; 22; 25) darstellbar sind, **dadurch gekennzeichnet, dass** eine dritte Welle (12) ein Sonnenrad eines ersten Planetensatzes (4) mit einem Hohlrad eines dritten Planetensatzes (6) verbindet und über eine erste Kupplung (9) mit einer vierten Welle (13; 16; 23; 28) verbindbar ist, die mit einem Steg eines zweiten Planetensatzes (5) gekoppelt ist, wobei eine fünfte Welle (14) mit einem Sonnenrad des dritten Planetensatzes (6) gekoppelt und über eine erste Bremse (7) am Gehäuse (1) festsetzbar ist, wobei ferner eine sechste Welle (15; 18; 20) ein Hohlrad des zweiten Planetensatzes (5) mit einem Steg des dritten Planetensatzes (6) verbindet und mittels einer zweiten Bremse (8) mit dem Gehäuse (1) koppelbar ist, und wobei die Antriebswelle (2) mit einem Hohlrad des ersten Planetensatzes (4) verbunden und die Abtriebswelle (3; 19; 22; 25) mit einem Sonnenrad des zweiten Planetensatzes (5) gekoppelt ist.

2. Mehrstufengetriebe nach Anspruch 1, **dadurch gekennzeichnet, dass** die vierte Welle (13) mittels einer zweiten Kupplung (10) mit der fünften Welle (14) lösbar verbindbar ist, wobei die Abtriebswelle (3) ferner mit einem Steg des ersten Planetensatzes (4) verbunden und über eine dritte Kupplung (11) mit der vierten Welle (13) lösbar koppelbar ist.

3. Mehrstufengetriebe nach Anspruch 1, **dadurch gekennzeichnet, dass** die Abtriebswelle (19) ferner mit einem Steg des ersten Planetensatzes (4) verbunden und die vierte Welle (16) zum einen über eine zweiten Kupplung (10) mit der fünften Welle (14) lösbar verbindbar und mittels einer dritten Kupplung (17) mit der sechsten Welle (18) koppelbar ist.

4. Mehrstufengetriebe nach Anspruch 1, **dadurch gekennzeichnet, dass** die vierte Welle (23) mittels einer zweiten Kupplung (10) mit der fünften Welle (14) lösbar verbindbar ist, wobei die Abtriebswelle (22) ferner mit einem Steg des ersten Planetensatzes (4) verbunden und mittels einer dritten Kupplung (21) mit der sechsten Welle (20) lösbar koppelbar ist.

5. Mehrstufengetriebe nach einem der Ansprüche 2 bis 4, **dadurch gekennzeichnet, dass** sich ein erstes Übersetzungsverhältnis durch Schließen der ersten Bremse (7) und der zweiten Kupplung (10), ein zweites Übersetzungsverhältnis durch Betätigen der zweiten Bremse (8) und der zweiten Kupplung (10), ein drittes Übersetzungsverhältnis durch Schließen der zweiten Bremse (8) und der ersten Kupplung (9), ein viertes Übersetzungsverhältnis durch Betätigen der ersten Bremse (7) und der ersten Kupplung (9), ein fünftes Übersetzungsverhältnis durch Schließen der ersten (9) und der dritten Kupplung (11; 17; 21) oder durch Betätigen der zweiten (10) und dritten Kupplung (11; 17; 21) oder durch Schließen der ersten (9) und zweiten Kupplung (10), und ein sechstes Übersetzungsverhältnis durch Betätigen der ersten Bremse (7) und der dritten Kupplung (11; 17; 21) ergibt.

6. Mehrstufengetriebe nach Anspruch 5, **dadurch gekennzeichnet, dass** sich ein zusätzliches Übersetzungsverhältnis durch Schließen der ersten (7) und zweiten Bremse (8) ergibt.

7. Mehrstufengetriebe nach Anspruch 1, **dadurch gekennzeichnet, dass** die vierte Welle (28) mittels einer zweiten Kupplung (10) mit der fünften Welle (14) lösbar verbindbar ist, wobei die Abtriebswelle (25) ferner über eine dritte Kupplung (26) mit einer siebten Welle (24) koppelbar ist, die mit einem Steg des ersten Planetensatzes (4) in Verbindung steht und mittels einer vierten Kupplung (27) mit der vierten Welle (28) lösbar verbindbar ist.

8. Mehrstufengetriebe nach Anspruch 7, **dadurch gekennzeichnet, dass** sich ein erstes Übersetzungsverhältnis durch Schließen der ersten Bremse (7), sowie der zweiten (10) und dritten Kupplung (26), ein zweites Übersetzungsverhältnis durch Betätigen der zweiten Bremse (8), sowie der zweiten (10) und dritten Kupplung (26), ein drittes Übersetzungsverhältnis durch Schließen der zweiten Bremse (8), sowie der ersten (9) und dritten Kupplung (26), ein viertes Übersetzungsverhältnis durch Betätigen der ersten Bremse (7), sowie der ersten (9) und dritten Kupplung (26), ein fünftes Übersetzungsverhältnis durch Schließen der ersten (9), dritten (26) und vierten Kupplung (27) oder durch Betätigen der ersten (9), zweiten (10) und dritten Kupplung (26) oder durch Schließen der zweiten (10), dritten (26) und vierten Kupplung (27) oder durch Betätigen der ersten (9), zweiten (10) und vierten Kupplung (27), ein sechstes Übersetzungsverhältnis durch Schließen der ersten Bremse (7), sowie der dritten (26) und vierten Kupplung (27), ein siebtes Übersetzungsverhältnis durch Betätigen der ersten Bremse (7), sowie der ersten (9) und vierten Kupplung (27), und ein achtes Übersetzungsverhältnis durch Schließen sämtlicher Bremsen (7, 8) und der vierten Kupplung (27) ergibt.

9. Mehrstufengetriebe nach Anspruch 8, **dadurch gekennzeichnet, dass** sich ein erstes zusätzliches Übersetzungsverhältnis durch Betätigen sämtlicher Bremsen (7, 8) und der dritten Kupplung (26), ein zweites zusätzliches Übersetzungsverhältnis durch Schließen der zweiten Bremse (8), sowie der zweiten (10) und vierten Kupplung (27), und ein drittes zusätzliches Übersetzungsverhältnis durch Betätigen der zweiten Bremse (8), sowie der ersten (9) und vierten Kupplung (27) ergibt.

10. Mehrstufengetriebe nach einem der vorhergehenden Ansprüche, **dadurch gekennzeichnet, dass** der erste (4) und der zweite Planetensatz (5) jeweils eine Standübersetzung von -1,800 und der dritte Planetensatz (6) eine Standübersetzung von -3,000 aufweisen.

11. Mehrstufengetriebe nach einem der vorhergehenden Ansprüche, **dadurch gekennzeichnet, dass** die Abtriebswelle (3; 19; 22; 25) als Antrieb und die Antriebswelle (2) als Abtrieb des Mehrstufengetriebes dient.

## Claims

1. Multi-stage gearbox of planetary construction, in particular splitter gear of a working machine, with a housing (1) in which three planet sets (4, 5, 6) and a plurality of shafts are accommodated, and with shift elements which are formed by brakes (7, 8) and clutches (9, 10, 11; 9, 10, 17; 9, 10, 21; 9, 10, 27, 28) and by means of their directed actuation of which various step-up ratios can be implemented between a drive shaft (2) and an output shaft (3; 19; 22; 25), **characterized in that** a third shaft (12) connects a sunwheel of a first planet set (4) to a rear wheel of a third planet set (6) and is connectable via a first clutch (9) to a fourth shaft (13; 16; 23; 28) which is coupled to a web of a second planet set (5), a fifth shaft (14) being coupled to a sunwheel of the third planet set (6) and being lockable on the housing (1) via a first brake (7), furthermore a sixth shaft (15; 18; 20) connecting a ring wheel of the second planet set (5) to a web of the third planet set (6) and being couplable to the housing (1) by means of a second brake (8), and the drive shaft (2) being connected to a ring wheel of the first planet set (4) and the output shaft (3; 19; 22; 25) being coupled to a sunwheel of the second planet set (5).

2. Multi-stage gearbox according to Claim 1, **characterized in that** the fourth shaft (13) is releasably connectable to the fifth shaft (14) by means of a second clutch (10), furthermore the output shaft (3) being connected to a web of the first planet set (4) and being releasably couplable to the fourth shaft (13) via a third clutch (11).

3. Multi-stage gearbox according to Claim 1, **characterized in that**, furthermore, the output shaft (19) is connected to a web of the first planet set (4) and, on the one hand, the fourth shaft (16) is releasably connectable to the fifth shaft (14) via a second clutch (10) and is couplable to the sixth shaft (18) by means of a third clutch (17).

4. Multi-stage gearbox according to Claim 1, **characterized in that** the fourth shaft (23) is releasably connectable to the fifth shaft (14) by means of a second clutch (10), furthermore the output shaft (22) being connected to a web of the first planet set (4) and being releasably couplable to the sixth shaft (20) by means of a third clutch (21).

5. Multi-stage gearbox according to one of Claims 2 to 4, **characterized in that** a first step-up ratio is obtained by closing the first brake (7) and the second clutch (10), a second step-up ratio is obtained by actuating the second brake (8) and the second clutch (10), a third step-up ratio is obtained by closing the second brake (8) and the first clutch (9), a fourth step-up ratio is obtained by actuating the first brake (7) and the first clutch (9), a fifth step-up ratio is obtained by closing the first (9) and the third (11; 17; 21) clutch or by actuating the second (10) and the third (11; 17; 21) clutch or by closing the first (9) and the second (10) clutch, and a sixth step-up ratio is obtained by actuating the first brake (7) and the third clutch (11; 17; 21).

6. Multi-stage gearbox according to Claim 5, **characterized in that** an additional step-up ratio is obtained by closing the first (7) and the second (8) brake.

7. Multi-stage gearbox according to Claim 1, **characterized in that** the fourth shaft (28) is releasably connectable to the fifth shaft (14) by means of a second clutch (10), furthermore the output shaft (25) being couplable via a third clutch (26) to a seventh shaft (24) which is connected to a web of the first planet set (4) and which is releasably connectable to the fourth shaft (28) by means of a fourth clutch (27).

8. Multi-stage gearbox according to Claim 7, **characterized in that** a first step-up ratio is obtained by closing the first brake (7) and the second (10) and the third (26) clutch, a second step-up ratio is obtained by actuating the second brake (8) and the second (10) and the third (26) clutch, a third step-up ratio is obtained by closing the second brake (8) and the first (9) and the third (26) clutch, a fourth step-up ratio is obtained by actuating the first brake (7) and the first (9) and the third (26) clutch, a fifth step-up ratio is obtained by closing the first (9), the third (26) and the fourth (27) clutch or by actuating the first (9), the second (10) and the third (26) clutch or by closing the second (10), the third (26) and the fourth (27) clutch or by actuating the first (9), the second (10) and the fourth (27) clutch, a sixth step-up ratio is obtained by closing the first brake (7) and the third (26) and the fourth (27) clutch, a seventh step-up ratio is obtained by actuating the first brake (7) and the first (9) and the fourth (27) clutch, and an eighth step-up ratio is obtained by closing all the brakes (7, 8) and the fourth clutch (27).

9. Multi-stage gearbox according to Claim 8, **characterized in that** a first additional step-up ratio is obtained by actuating all the brakes (7, 8) and the third clutch (26), a second additional step-up ratio is obtained by closing the second brake (8) and the second (10) and the fourth (27) clutch, and a third additional step-up ratio is obtained by actuating the second brake (8) and the first (9) and the fourth (27) clutch.

10. Multi-stage gearbox according to one of the preceding claims, **characterized in that** the first (4) and the second (5) planet set have in each case a standing step-up of -1.800 and the third planet set (6) has a standing step-up of -3.000.

11. Multi-stage gearbox according to one of the preceding claims, **characterized in that** the output shaft (3; 19; 22; 25) serves as a drive and the drive shaft (2) serves as an output of the multi-stage gearbox.

## Revendications

1. Boîte de vitesses multi-étagée de construction planétaire, en particulier boîte de vitesses à doubleur de gamme d'un engin de travail, comprenant un boîtier (1) dans lequel sont reçus trois trains planétaires (4, 5, 6) et plusieurs arbres, et comprenant des éléments de changement de vitesses qui sont formés par des freins (7, 8) et des embrayages (9, 10, 11 ; 9, 10, 17 ; 9, 10, 21 ; 9, 10, 27, 28) et au moyen de l'actionnement spécifique desquels différents rapports de démultiplication entre un arbre d'entraînement (2) et un arbre de prise de force (3 ; 19 ; 22 ; 25) peuvent être réalisés, **caractérisée en ce qu'**un troisième arbre (12) connecte une roue solaire d'un premier train planétaire (4) à une couronne dentée d'un troisième train planétaire (6) et peut être connecté par le biais d'un premier embrayage (9) à un quatrième arbre (13 ; 16 ; 23 ; 28) qui est accouplé à un porte-satellites d'un deuxième train planétaire (5), un cinquième arbre (14) étant accouplé à une roue solaire du troisième train planétaire (6) et pouvant être fixé par le biais d'un premier frein (7) au boîtier (1), un sixième arbre (15 ; 18 ; 20) connectant en outre une couronne dentée du deuxième train planétaire (5) à un porte-satellites du troisième train planétaire (6) et pouvant être accouplé au moyen d'un deuxième frein (8) au boîtier (1), et l'arbre d'entraînement (2) étant connecté à une couronne dentée du premier train planétaire (4) et l'arbre de prise de force (3 ; 19 ; 22 ; 25) étant accouplé à une roue solaire du deuxième train planétaire (5).

2. Boîte de vitesses multi-étagée selon la revendication 1, **caractérisée en ce que** le quatrième arbre (13) peut être connecté de manière amovible au moyen d'un deuxième embrayage (10) au cinquième arbre (14), l'arbre de prise de force (3) étant en outre connecté à un porte-satellites du premier train planétaire (4) et pouvant être accouplé de manière amovible par le biais d'un troisième embrayage (11) au quatrième arbre (13).

3. Boîte de vitesses multi-étagée selon la revendication 1, **caractérisée en ce que** l'arbre de prise de force (19) est en outre connecté à un porte-satellites du premier train planétaire (4) et le quatrième arbre (16) peut être connecté de manière amovible d'une part par le biais d'un deuxième embrayage (10) au cinquième arbre (14) et peut être accouplé au moyen d'un troisième embrayage (17) au sixième arbre (18).

4. Boîte de vitesses multi-étagée selon la revendication 1, **caractérisée en ce que** le quatrième arbre (23) peut être connecté de manière amovible au moyen d'un deuxième embrayage (10) au cinquième arbre (14), l'arbre de prise de force (22) étant en outre connecté à un porte-satellites du premier train planétaire (4) et pouvant être accouplé de manière amovible au moyen d'un troisième embrayage (21) au sixième arbre (20).

5. Boîte de vitesses multi-étagée selon l'une quelconque des revendications 2 à 4, **caractérisée en ce qu'**un premier rapport de démultiplication s'obtient par fermeture du premier frein (7) et du deuxième embrayage (10), un deuxième rapport de démultiplication s'obtient par actionnement du deuxième frein (8) et du deuxième embrayage (10), un troisième rapport de démultiplication s'obtient par fermeture du deuxième frein (8) et du premier embrayage (9), un quatrième rapport de démultiplication s'obtient par actionnement du premier frein (7) et du premier embrayage (9), un cinquième rapport de démultiplication s'obtient par fermeture du premier (9) et du troisième embrayage (11 ; 17 ; 21) ou par actionnement du deuxième (10) et du troisième embrayage (11 ; 17 ; 21) ou par fermeture du premier (9) et du deuxième embrayage (10), et sixième rapport de démultiplication s'obtient par actionnement du premier frein (7) et du troisième embrayage (11 ; 17 ; 21).

6. Boîte de vitesses multi-étagée selon la revendication 5, **caractérisée en ce qu'**un rapport de démultiplication supplémentaire s'obtient par fermeture du premier (7) et du deuxième (8) frein.

7. Boîte de vitesses multi-étagée selon la revendication 1, **caractérisée en ce que** le quatrième arbre (28) peut être connecté de manière amovible au moyen d'un deuxième embrayage (10) au cinquième arbre (14), l'arbre de prise de force (25) pouvant en outre être accouplé par le biais d'un troisième embrayage (26) à un septième arbre (24), qui est en liaison avec un porte-satellites du premier train planétaire (4) et qui peut être connecté de manière amovible au moyen d'un quatrième embrayage (27) au quatrième arbre (28).

8. Boîte de vitesses multi-étagée selon la revendication 7, **caractérisée en ce qu'**un premier rapport de démultiplication s'obtient par fermeture du premier frein (7), ainsi que du deuxième (10) et du troisième embrayage (26), un deuxième rapport de démultiplication s'obtient par actionnement du deuxième frein (8), ainsi que du deuxième (10) et du troisième embrayage (26), un troisième rapport de démultiplication s'obtient par fermeture du deuxième frein (8), ainsi que du premier (9) et du troisième embrayage (26), un quatrième rapport de démultiplication s'obtient par actionnement du premier frein (7), ainsi que du premier (9) et du troisième embrayage (26), un cinquième rapport de démultiplication s'obtient par fermeture du premier (9), du troisième (26) et du quatrième embrayage (27) ou par actionnement du premier (9), du deuxième (10) et du troisième embrayage (26) ou par fermeture du deuxième (10), du troisième (26) et du quatrième embrayage (27) ou par actionnement du premier (9), du deuxième (10) et du quatrième embrayage (27), un sixième rapport de démultiplication s'obtient par fermeture du premier frein (7), ainsi que du troisième (26) et du quatrième embrayage (27), un septième rapport de démultiplication s'obtient par actionnement du premier frein (7), ainsi que du premier (9) et du quatrième embrayage (27), et un huitième rapport de démultiplication s'obtient par fermeture de tous les freins (7, 8) et du quatrième embrayage (27).

9. Boîte de vitesses multi-étagée selon la revendication 8, **caractérisée en ce qu'**un premier rapport de démultiplication supplémentaire s'obtient par actionnement de tous les freins (7, 8) et du troisième embrayage (26), un deuxième rapport de démultiplication supplémentaire s'obtient par fermeture du deuxième frein (8), ainsi que du deuxième (10) et du quatrième embrayage (27), et un troisième rapport de démultiplication supplémentaire s'obtient par actionnement du deuxième frein (8), ainsi que du premier (9) et du quatrième embrayage (27).

10. Boîte de vitesses multi-étagée selon l'une quelconque des revendications précédentes, **caractérisée en ce que** le premier (4) et le deuxième train planétaire (5) présentent chacun une démultiplication statique de -1,800 et le troisième train planétaire (6) présente une démultiplication statique de -3,000.

11. Boîte de vitesses multi-étagée selon l'une quelconque des revendications précédentes, **caractérisée en ce que** l'arbre de prise de force (3 ; 19 ; 22 ; 25) sert d'entraînement et l'arbre d'entraînement (2) sert de prise de force de la boîte de vitesses multi-étagée.
